# EUROPEAN PATENT SPECIFICATION

(11) **EP 4 543 265 B1**
(45) Date of publication and mention of the grant of the patent: **08.04.2026**
(21) Application number: 23736854.3
(22) Date of filing: 12.06.2023
(51) Int. Cl.: A47J 31/54

(54) **HEATING DEVICE FOR A MACHINE FOR PREPARING HOT BEVERAGES**
HEIZVORRICHTUNG FÜR EINE MASCHINE ZUR ZUBEREITUNG VON HEISSGETRÄNKEN
DISPOSITIF DE CHAUFFAGE POUR UNE MACHINE DE PRÉPARATION DE BOISSONS CHAUDES

(30) Priority: 23.06.2022 IT 202200013258
(43) Date of publication of application: 30.04.2025
(73) Proprietor: I.R.C.A. S.p.a. Industria Resistenze Corazzate e Affini, 31029 Vittorio Veneto (IT)
(72) Inventor: BORTOLUZZI, Christian, 31010 Godega di Sant'Urbano (IT); DE LUCA, Daniele, 31029 Vittorio Veneto (IT); WEDAM, Stefano, 31010 Mareno di Piave (IT); ZOPPAS, Federico, 31100 Treviso (IT)
(74) Representative: de Alteriis, Renato
(86) International application number: PCT/IB2023/056038
(87) International publication number: WO 2023/248052

(56) References cited:
- EP-A1- 2 849 617
- EP-B1- 2 849 617
- CN-A- 106 820 972
- DE-A1- 10 257 251
- DE-A1- 3 109 300
- DE-U1- 8 617 681

## Description

### Field of the invention

The present invention relates to the field of devices for preparing beverages, in particular for domestic use.

In particular, the invention relates to a heating device, more in particular an instantaneous exchanger or heater or flow through heater, adapted to heat a flow of liquid, in particular water, for preparing the beverage.

### Background art

Machines for preparing hot beverages, such as coffee, are very common.

Such machines are provided with a heating device adapted to heat water for preparing the beverage.

One type of heating device is referred to as a flow through heater (FTH), or flow heater or instantaneous heater, in particular instantaneous flow heater. A flow through heater is particularly adapted to heat a water flow, i.e., adapted to heat water as it flows in a conduit of the device.

Heating devices of the FTH type comprise a metal body, a conduit for the liquid to be heated and one or more heating elements which generate heat by Joule effect.

It is desirable to make the metal body of aluminum or aluminum alloy, as it is a material which conducts heat well.

However, the aluminum metal body should not come into direct contact with the liquid to be heated, due to health concerns.

Therefore, the heating devices involve the insertion of a stainless steel tube into the metal body, so that the liquid comes into contact with the stainless steel tube and not with the metal body. The steel tube is typically brazed to the metal body.

However, the use of steel tubes has several disadvantages, including: reduced energy efficiency; adhesion of limestone to the steel tube; greater device production complexity and longer construction times.

Furthermore, the steel tube does not provide any electrical insulation between the liquid and the heating element.

Therefore, the need is felt to overcome the limitations of the prior art. DE 31 09 300 A1 shows a heating device of the type. DE 86 17 681 U1 discloses a heating device with an interior coating. EP 2 849 617 A1, DE 102 57 251 A1 and CN 106 820 972 A show further heating devices.

### Summary of the invention

It is an object of the present invention to provide a heating device, in particular of the FTH type, for machines for preparing beverages which is particularly safe for health.

Another object of the invention is to make a heater of the FTH type which is safe for health and energy efficient.

Another object of the invention is to make a heater of the FTH type which is safe for health and can be produced easily.

The present invention achieves at least one of such objects, and other objects which will become apparent in the light of the present description, by means of a heating device, in particular a flow through heater, for machine for preparing hot beverages, the heating device comprising
- a metal body, made of aluminum or aluminum alloy;
- at least one electric heater arranged in the metal body;
- a conduit for the passage of an edible liquid to be heated, in particular water, delimited by a first inner surface of the metal body;

wherein the metal body comprises a first end portion and a second end portion which delimit an initial stretch and a final stretch, respectively, of said conduit;
wherein the first end portion and the second end portion have a respective outer surface and are adapted to be inserted into a respective tube;
wherein said first inner surface, the outer surface of said first end portion and the outer surface of said second end portion are coated with a respective coating layer, in particular suitable for food contact.

The invention further relates to a machine for preparing beverages, according to claim 12.

Advantageously, a device according to the invention allows for the use of a metal body made of aluminum or aluminum alloy which delimits the conduit for the passage of liquid, and maximizes food safety, i.e., safety for people's health. In fact, the coating layer prevents direct contact between the liquid and aluminum or aluminum alloy.

In particular, advantageously, the coating layer of said first inner surface prevents the contact of the metal of the metal body with the liquid flowing inside the conduit. Furthermore, it is particularly advantageous that the outer surface of said first end portion and the outer surface of said second end portion are also provided with a respective coating layer. In fact, when said end portions are inserted into a respective tube, liquid can fill the gap between the outer surface of each end portion and the respective tube. Therefore, the coating layer prevents direct contact with the aluminum or aluminum alloy in such areas as well.

In particular, each coating layer is made of polymer material or sol-gel.

Preferably, each coating layer is made of, or substantially made of the following materials: a Polyamide (PA), Polytetrafluoroethylene (PTFE), Perfluoroalkoxy (PFA), Fluorinated Ethylene Propylene (FEP), a Polyurethane (PU), a polyester, an epoxy material, a silicone, a sol-gel, amorphous silicon, amorphous silicon oxide, silicon nitride, silicon dioxide, polysilicon, fluorocarbon, organofluorine.

It is particularly preferred that each coating layer is made of, or substantially made of Polyamide (PA).

In particular, Polyamide makes the production process of the device easy and fast, as well as being suitable for food contact. In particular Polyamide allows making said device easily and quickly, without the need to pre-treat the surface to be coated, and allows bending the conduit after the coating operation, avoiding the coating layer from being damaged.

The following materials are particularly advantageous because they are suitable for coating surfaces that are difficult to reach: amorphous silicon, amorphous silicon oxide, silicon nitride, silicon dioxide, polysilicon, fluorocarbon, organofluorine.

Advantageously, the coating layers allow increasing resistance to limestone adhesion.

Further features and advantages of the invention will become more apparent in the light of the detailed description of exemplary, but non-exclusive embodiments thereof.

The dependent claims describe particular embodiments of the invention.

### Brief description of the drawings

In the description of the invention, reference is made to the accompanying drawings, which are provided by way of non-limiting example, in which:
Fig. 1 shows a perspective view of a device according to the invention;
Fig. 1A diagrammatically shows a sectional view of a detail of the device of Fig. 1, with an end portion of the device inserted into a tube;
Fig. 2 shows section A-A of Fig. 1;
Fig. 3 shows section A-A only of the metal body of the device of Fig. 1;

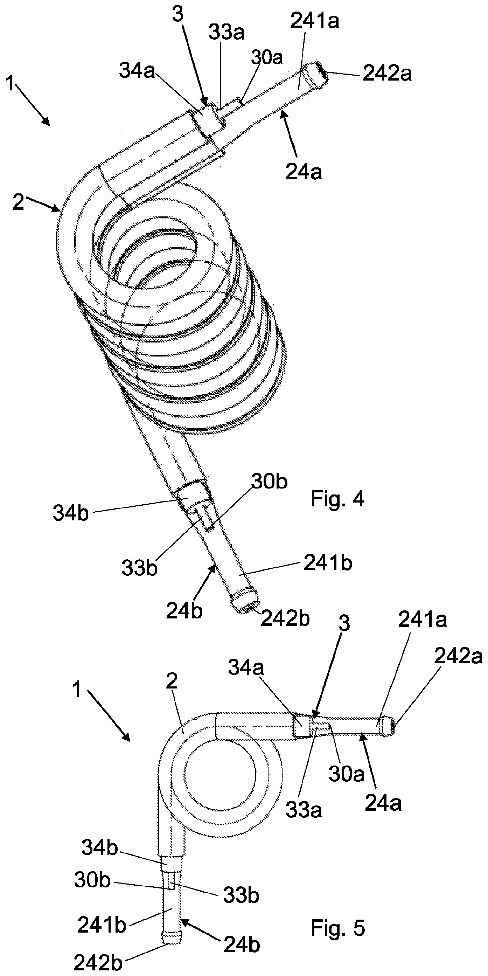

Fig. 4 shows another perspective view of the device of Fig. 1;
Fig. 5 shows a plan view of the device of Fig. 1.

The same elements or components have the same reference numerals.

### Description of embodiments of the invention

With reference to the Figures, non-limiting exemplary embodiments of a device 1, or heating device, for a machine for preparing hot beverages according to the invention are described.

In particular, the device 1 is of the flow through heater type, or instant heater or flow heater type.

In particular, the device 1 is adapted to be mounted in the machine for preparing hot beverages. By way of example and not by way of limitation, the machine is for preparing coffee.

In all the embodiments, the device 1 comprises
- a metal body 2 made of aluminum or aluminum alloy;
- at least one electric heater 3 arranged in the metal body 2;
- a conduit 4 for the passage of an edible liquid to be heated, in particular water, delimited by a first inner surface 21 of the metal body 2;

wherein the metal body 2 comprises a first end portion 24a and a second end portion 24b which delimit an initial stretch and a final stretch, respectively, of said conduit 4;
wherein the first end portion 24a and the second end portion 24b have a respective outer surface 241a, 241b and are adapted to be inserted into a respective tube 9;
wherein said first inner surface 21, the outer surface 241a of said first end portion 24a and the outer surface 241b of said second end portion 24b are coated with a respective coating layer, in particular suitable for food contact.

The device 1 is particularly adapted to heat a water flow, more in particular it is adapted to heat water as it flows in the conduit 4 of the device 1.

The coating layers are in particular adapted to contact the edible liquid to be heated (or heated by the device 1, in the case of the coating layer of the end portion 24b), in particular they are adapted to be wetted by the edible liquid to be heated (or heated by the device 1, in the case of the coating layer of the end portion 24b).

In particular, the coating layers are made of a different material with respect to the metal body 2.

The coating layers are preferably made of the same material.

The coating layers preferably have the same thickness.

Each coating layer is preferably made of a polymer material or sol-gel.

Preferably, each coating layer is substantially made of, or made of one of the following materials: a Polyamide (PA), Polytetrafluoroethylene (PTFE), Perfluoroalkoxy (PFA), Fluorinated Ethylene Propylene (FEP), a Polyurethane (PU), a polyester, an epoxy material, a silicone, a sol-gel, amorphous silicon, amorphous silicon oxide, silicon nitride, silicon dioxide, polysilicon, fluorocarbon, organofluorine.

It is particularly preferred that each coating layer is substantially made of, or made of Polyamide (PA).

Polyamide has been carefully selected. Indeed, the Inventors have found that Polyamide offers various advantages.

In particular, Polyamide allows facilitating the production process of the device 1. In fact, Polyamide does not require pre-treatment operations of the surfaces to be coated. In particular, Polyamide does not require mechanical operations on the surface to be coated, such as abrasion of the surface to be coated to increase the roughness thereof.

Polyamide further has suitable mechanical properties such that, to obtain a conduit 4 with one or more curved stretches, the inner surface of a metal body 2 the conduit 4 of which is straight can first be coated with polyamide; then the metal body 2 can be bent so that the conduit 4 has one or more curved stretches. In particular, by bending the inner surface 21 (coated with polyamide) delimiting the conduit 4, the Polyamide coating layer is not damaged. The same applies in the case of obtaining curved end stretches of 24a, 24b.

Furthermore, advantageously, Polyamide allows coating a conduit 4 having an inner diameter from 2 to 10 mm, for example from 4 to 7 mm. In other words, Polyamide advantageously allows coating a conduit 4 having a very small inner diameter.

The following materials are particularly advantageous because they are suitable for coating surfaces which are difficult to reach: amorphous silicon, amorphous silicon oxide, silicon nitride, silicon dioxide, polysilicon, fluorocarbon, organofluorine.

In particular, the coating layer is made of a material approved for food contact.

"Approved for food contact" preferably means approved by one or more entities, preferably by the FDA (Food and Drug Administration) and/or by the BfR (Bundesinstitut für Risikobewertung) and/or others.

The coating layer preferably also has non-stick properties, in particular with respect to limestone.

Preferably, each coating layer has a thickness from 2 to 100 µm; preferably from 5 to 25 µm.

Preferably, substantially the entire inner surface 21 is provided with the respective coating layer; substantially the entire outer surface 241a is provided with the respective coating layer; and substantially the entire outer surface 241b is provided with the respective coating layer.

In addition to the outer surfaces 241a, 241b, other areas of the outer surface of the metal body 2 can also optionally be provided with a coating layer. For example, all or substantially all of the outer surface of the metal body 2 can be provided with a coating layer.

Said at least one electric heater 3 is, in particular, outside the channel 4, in particular completely outside the channel 4.

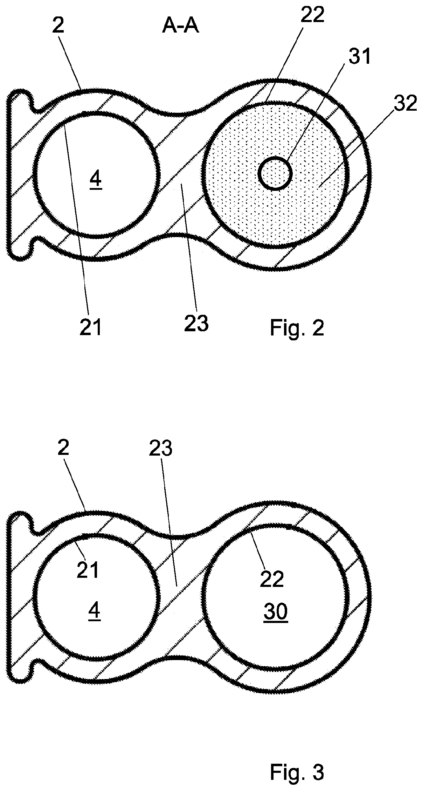

In particular, the metal body 2 is provided with two channels or holes, in particular through channels or holes. One of the two holes forms said conduit 4 for the liquid. In the other hole 30 (Fig. 3) said electric heater 3 is arranged or made. Each hole is delimited by a respective inner surface 21, 22 of the metal body 2. The metal body 2 is preferably a monolithic body, in particular obtained by extrusion.

In particular, the monolithic metal body 2 comprises said two end portions 24a, 24b. Therefore, the end portions 24a, 24b are also made of aluminum or aluminum alloy. The end portions 24a, 24b are in particular tubular portions.

Part of the inner surface 21 of the conduit 4 is formed or defined by the end portion 24a, and part of the inner surface 21 of the conduit 4 is formed or defined by the end portion 24b.

The outer surface 241a of the end portion 24a and the outer surface 241b of the end portion 24b are opposite a respective portion of the inner surface 21.

The end portion 24a comprises the opening 242a or inlet section (for the liquid) of the conduit **4,** and the end portion 24b comprises the opening 242b or outlet section (for the liquid) of the conduit 4.

Preferably, the end portion 24a provided with the coating layer extends (in particular, along the longitudinal axis of the conduit 4) from 2 to 150 mm, preferably from 10 to 150 mm, preferably from 25 to 50 mm, from the end delimiting the inlet opening 242a; and the end portion 24b provided with the coating layer extends (in particular, along the longitudinal axis of the conduit 4) from 2 to 150 mm, preferably from 10 to 150 mm, preferably from 25 to 50 mm, from the end delimiting the outlet opening 242b.

In particular, the inner surface 21 and the inner surface 22 extend about a respective axis, in particular they extend about a respective longitudinal axis. In particular, the inner surface 21 and the inner surface 22 are continuous surfaces extending about said respective axis. In particular, said respective axis can be straight, curved, or can comprise one or more straight stretches and one or more curved stretches.

Preferably, the axes about which the inner surface 21 and inner surface 22 extend are parallel to each other.

In particular, preferably, said at least one electric heater 3 and said conduit 4 extend parallel to each other.

Preferably, the length of the inner surface 21 along the axis about which it extends is greater than the length of the inner surface 22 along the axis about which it extends.

Preferably, the conduit 4 has a greater length than the length of said at least one electric heater 3.

In particular, each end portion 24a, 24b protrudes, in particular outwards, with respect to the end 30a, 30b of the at least one electric heater 3 being proximal thereto.

Advantageously, thereby, the end portions 24a, 24b can be inserted into a respective tube 9, in particular into a respective flexible tube.

However, it is possible that the end portions 24a, 24b can be inserted into a respective tube 9 in other manners.

Preferably, the electric heater 3 and the conduit 4 each comprise a spirally wound stretch. In particular, the spirally wound stretch of the conduit 4 is arranged between the initial stretch of the conduit 4, delimited by the end portion 24a, and the final stretch of the conduit 4, delimited by the end portion 24b.

Preferably, the inner surface 21 and the inner surface 22 have a circular section.

Preferably, the conduit 4 has an inner diameter from 2 to 10 mm, preferably from 4 to 7 mm.

Preferably, the end portion 24a and the end portion 24b are straight or substantially straight.

The aforesaid electric heater 3 comprises at least one electric resistor 31, or resistive element or electric resistor, embedded in an electrically insulating material 32.

The electric resistor 31 is for example a resistive cable or wire, preferably spirally wound, in particular about the longitudinal axis thereof.

The electrically insulating material 32 is preferably magnesium oxide.

The electrically insulating material 32 is in contact, in particular directly in contact, with the inner surface 22 (distinct from the inner surface 21) of the metal body 2.

The electric heater 3 is adapted to generate heat by Joule effect, i.e., it is adapted to generate heat when it is crossed by an electric current.

Advantageously, the coating layer coating the inner surface 21 is adapted to ensure an electrical insulation, in particular an additional electrical insulation with respect to said electrically insulating material 32, between the electric heater 3 and the edible liquid flowing in the conduit 4.

For the power supply, two pins 33a, 33b are provided, each connected to a respective end of the electric resistor 31. The pins 33a, 33b protrude from the metal body 2.

In particular, two closing elements 34a, 34b made of electrically insulating material, for example ceramic material, are further provided. The closing elements 34a, 34b are fixed to the metal body 2, and are crossed by a respective pin 33a, 33b. In particular, the closing elements 34a, 34b are inserted into the hole 30 of the metal body 2 delimited by the inner surface 22.

In all the embodiments, the electric heater 3 can transfer heat to the liquid flowing in the conduit 4, through the metal body 2.

In particular, the heat generated by the electric heater 3 is transmitted to the metal body 2, which in turn transmits it to the liquid.

More in particular, the two holes 4, 30 of the metal body 2 are separated from each other by a wall 23 of the metal body 2. Preferably, a portion of the inner surface 21 and a portion of the inner surface 22 are opposite each other and are in particular portions of said wall 23.

Optionally, the metal body 2 can also be provided with one or more further electric heaters 3, each arranged in a respective hole of the metal body 2. Therefore, the metal body 2 can be provided with more than two distinct holes or channels.

As already mentioned, the invention further relates to a machine for preparing beverages comprising a device 1.

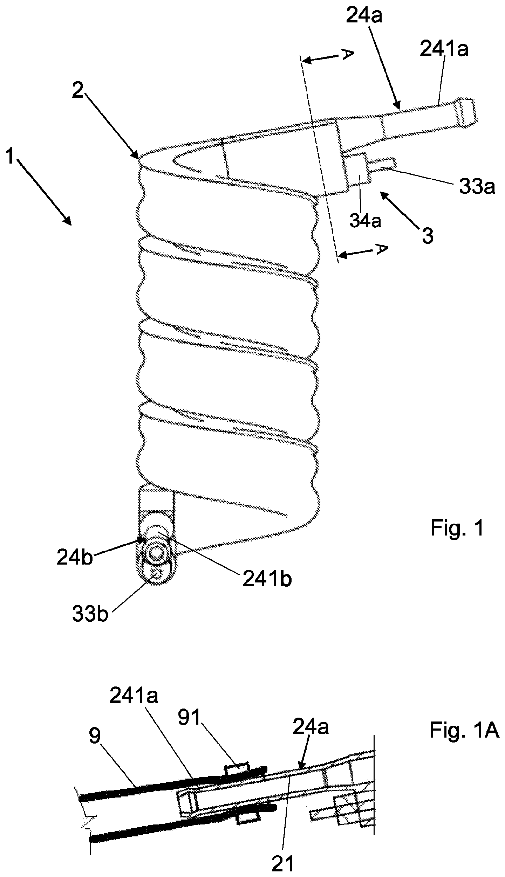

In particular, the machine can comprise two tubes 9, in particular two flexible tubes. One of the two tubes 9 is diagrammatically shown in Fig. 1A.

A first tube of said two tubes 9 is adapted to conduct the liquid to be heated in the conduit 4, and the other tube (or second tube) of the two tubes is adapted to receive the heated liquid exiting from the conduit 4.

In particular, the first end portion 24a of the metal body 2 is inserted into the first tube 9, and the second end portion 24b of the metal body 2 is inserted into the second tube.

Fixing means 91 are preferably provided for fixing, in particular in a sealing manner, each tube 9 to the respective end portion 24a, 24b.

By way of mere example and not by way of limitation, each tube 9 is fixed to the respective end portion 24a, 24b by one or more clamps 91.

A device 1 according to the invention offers several advantages, including those listed below.

With particular reference to Figure 3, it can be noted that when an end portion 24a, 24b is inserted into the respective tube 9, the liquid can enter the gap between each end portion 24a, 24b and the respective tube into which it is inserted. Advantageously, the coating layer of the outer surfaces 241a, 241b prevents contact (in particular direct contact) between the liquid and the aluminum or aluminum alloy from which the end portions 24a, 24b are made.

The presence of the coating layer coating the inner surface 21 allows making the metal body 2 of aluminum or aluminum alloy, so as to transmit heat well, and avoiding the use of a tube, for example made of stainless steel, inside the hole delimited by the inner surface 21. In fact, since the coating layer is suitable for food contact, and is interposed between the liquid and the metal body 2 (the coating layer is wet by the liquid), it is not necessary to use the steel tube to overcome the compatibility problems related to food contact of the metal body 2 in aluminum or aluminum alloy. Therefore, the heating device 1 is safe for health.

The heat exchange efficiency between the electric heater 3 and the liquid flowing in the conduit 4 is also improved. In fact, there are no heat losses due to the presence of a steel tube where the liquid flows.

Furthermore, the coating layer allows increasing the adhesion resistance of the limestone on the wall of the conduit 4.

Advantageously, the electrical safety is further increased by placing the coating layer between the liquid and the metal body 2, as previously explained.

Advantageously, moreover, by using a coating layer having a lower electrical conductivity than the material of which the metal body 2 is made, it is possible to check, easily and quickly, and in particular compatibly with mass production, whether the coating layer has been applied correctly.

## Claims

1. A heating device (1), in particular a flow through heater, for a machine for preparing hot beverages,
the heating device (1) comprising
- a metal body (2) made of aluminum or aluminum alloy;
- at least one electric heater (3) arranged in the metal body (2);
- a conduit (4) for the passage of an edible liquid to be heated, in particular water, delimited by a first inner surface (21) of the metal body (2);
wherein the metal body (2) comprises a first end portion (24a) and a second end portion (24b) which delimit an initial stretch and a final stretch, respectively, of said conduit (4);
wherein the first end portion (24a) and the second end portion (24b) have a respective outer surface (241a, 241b) and are adapted to be inserted into a respective tube (9);
**characterized in that** said first inner surface (21), the outer surface (241a) of said first end portion (24a) and the outer surface (241b) of said second end portion (24b) are coated with a respective coating layer, in particular suitable for food contact.

2. A heating device (1) according to claim 1, wherein each coating layer is made of a polymer material or sol-gel.

3. A heating device (1) according to claim 1 or 2, wherein each coating layer is made or substantially made of one of the following materials: a Polyamide (PA), Polytetrafluoroethylene (PTFE), Perfluoroalkoxy (PFA), Fluorinated EthylenePropylene (FEP), a Polyurethane (PU), a polyester, an epoxy material, a silicone, or a sol-gel.

4. A heating device (1) according to claim 1 or 2, wherein each coating layer is made or substantially made of one of the following materials: amorphous silicon, amorphous silicon oxide, silicon nitride, silicon dioxide, polysilicon, fluorocarbon, or organofluorine.

5. A heating device (1) according to any one of the preceding claims, wherein each coating layer is made or substantially made of Polyamide (PA).

6. A heating device (1) according to any one of the preceding claims, wherein each coating layer has a thickness from 2 to 100 µm; preferably from 5 to 25 µm.

7. A heating device (1) according to any one of the preceding claims, wherein the conduit (4) has a length greater than the length of said at least one electric heater (3); in particular so that the first end portion (24a) and the second end portion (24b) are adapted to be inserted into the respective tube (9).

8. A heating device (1) according to any one of the preceding claims, wherein each end portion (24a, 24b) protrudes, in particular outwards, with respect to the end (30a, 30b) of the at least one electric heater (3) being proximal thereto.

9. A heating device (1) according to any one of the preceding claims, wherein said at least one electric heater (3) comprises at least one electric resistor (31) incorporated in an electrically insulating material (32); wherein said electrically insulating material (32) is in contact, in particular directly in contact, with a second inner surface (22) of the metal body (2).

10. A heating device (1) according to any one of the preceding claims, wherein said at least one electric heater (3) and said conduit (4) extend parallel to each other.

11. A heating device (1) according to any one of the preceding claims, wherein said conduit (4) has an inner diameter from 2 to 10 mm; preferably from 4 to 7 mm.

12. A machine for preparing beverages comprising a device (1) according to any one of the preceding claims.

13. A machine according to claim 12, comprising a first tube (9), in particular flexible, and a second tube, in particular flexible;
wherein said first end portion (24a) is inserted into said first tube (9) and said second end portion (24b) is inserted into said second tube.

## Patentansprüche

1. Heizvorrichtung (1), insbesondere ein Durchlauferhitzer, für eine Maschine zur Zubereitung von Heißgetränken, wobei die Heizvorrichtung (1) umfasst
- einen Metallkörper (2), der aus Aluminium oder einer Aluminiumlegierung besteht;
- mindestens einen elektrischen Erhitzer (3), der in dem Metallkörper (2) angeordnet ist;
- eine Leitung (4) für den Durchfluss einer zu erwärmenden verzehrbaren Flüssigkeit, insbesondere Wasser, die durch eine erste Innenfläche (21) des Metallkörpers (2) begrenzt ist;
wobei der Metallkörper (2) einen ersten Endabschnitt (24a) und einen zweiten Endabschnitt (24b) umfasst, die eine Anfangsstrecke bzw. eine Endstrecke der Leitung (4) begrenzen;
wobei der erste Endabschnitt (24a) und der zweite Endabschnitt (24b) eine jeweilige Außenfläche (241a, 241b) aufweisen und dazu ausgelegt sind, in ein jeweiliges Rohr (9) eingeführt zu werden;
**dadurch gekennzeichnet, dass**
die erste Innenfläche (21), die Außenfläche (241a) des ersten Endabschnitts (24a) und die Außenfläche (241b) des zweiten Endabschnitts (24b) mit einer jeweiligen Beschichtungsschicht beschichtet sind, die insbesondere für den Kontakt mit Lebensmitteln geeignet ist.

2. Heizvorrichtung (1) nach Anspruch 1, wobei jede Beschichtungsschicht aus einem Polymermaterial oder Sol-Gel besteht.

3. Heizvorrichtung (1) nach Anspruch 1 oder 2, wobei jede Beschichtungsschicht aus einem der folgenden Materialien besteht oder im Wesentlichen daraus besteht: einem Polyamid (PA), Polytetrafluorethylen (PTFE), Perfluoralkoxy (PFA), fluoriertem Ethylenpropylen (FEP), einem Polyurethan (PU), einem Polyester, einem Epoxidmaterial, einem Silikon oder einem Sol-Gel.

4. Heizvorrichtung (1) nach Anspruch 1 oder 2, wobei jede Beschichtungsschicht aus einem der folgenden Materialien besteht oder im Wesentlichen daraus besteht: amorphem Silizium, amorphem Siliziumoxid, Siliziumnitrid, Siliziumdioxid, Polysilizium, Fluorkohlenstoff oder Organofluor.

5. Heizvorrichtung (1) nach einem der vorhergehenden Ansprüche, wobei jede Beschichtungsschicht aus Polyamid (PA) besteht oder im Wesentlichen daraus besteht.

6. Heizvorrichtung (1) nach einem der vorhergehenden Ansprüche, wobei jede Beschichtungsschicht eine Dicke von 2 bis 100 µm, vorzugsweise von 5 bis 25 µm, aufweist.

7. Heizvorrichtung (1) nach einem der vorhergehenden Ansprüche, wobei die Leitung (4) eine Länge aufweist, die größer ist als die Länge des mindestens einen elektrischen Erhitzers (3); insbesondere derart, dass der erste Endabschnitt (24a) und der zweite Endabschnitt (24b) dazu ausgelegt sind, in das jeweilige Rohr (9) eingeführt zu werden.

8. Heizvorrichtung (1) nach einem der vorhergehenden Ansprüche, wobei jeder Endabschnitt (24a, 24b) in Bezug auf das Ende (30a, 30b) des mindestens einen elektrischen Erhitzers (3), das proximal dazu liegt, insbesondere nach außen hervorsteht.

9. Heizvorrichtung (1) nach einem der vorhergehenden Ansprüche, wobei der mindestens eine elektrische Erhitzer (3) mindestens einen elektrischen Widerstand (31) umfasst, der in ein elektrisch isolierendes Material (32) eingebettet ist; wobei das elektrisch isolierende Material (32) mit einer zweiten Innenfläche (22) des Metallkörpers (2) in Kontakt steht, insbesondere in direktem Kontakt.

10. Heizvorrichtung (1) nach einem der vorhergehenden Ansprüche, wobei sich der mindestens eine elektrische Erhitzer (3) und die Leitung (4) parallel zueinander erstrecken.

11. Heizvorrichtung (1) nach einem der vorhergehenden Ansprüche, wobei die Leitung (4) einen Innendurchmesser von 2 bis 10 mm, vorzugsweise von 4 bis 7 mm, aufweist.

12. Maschine zur Zubereitung von Getränken, die eine Vorrichtung (1) nach einem der vorhergehenden Ansprüche umfasst.

13. Maschine nach Anspruch 12, die ein erstes, insbesondere flexibles, Rohr (9) und ein zweites, insbesondere flexibles, Rohr umfasst;
wobei der erste Endabschnitt (24a) in das erste Rohr (9) eingeführt ist und der zweite Endabschnitt (24b) in das zweite Rohr eingeführt ist.

## Revendications

1. Dispositif de chauffage (1), en particulier un élément chauffant à passage direct, pour une machine de préparation de boissons chaudes, le dispositif de chauffage (1) comprenant
- un corps métallique (2) en aluminium ou alliage d'aluminium ;
- au moins un élément chauffant électrique (3) disposé dans le corps métallique (2) ;
- un conduit (4) pour le passage d'un liquide comestible à chauffer, notamment de l'eau, délimité par une première surface intérieure (21) du corps métallique (2) ;
dans lequel le corps métallique (2) comprend une première portion d'extrémité (24a) et une deuxième portion d'extrémité (24b) qui délimitent une étendue initiale et une étendue finale, respectivement, dudit conduit (4) ;
dans lequel la première portion d'extrémité (24a) et la deuxième portion d'extrémité (24b) ont une surface extérieure respective (241a, 241b) et sont adaptées pour être insérées dans un tube respectif (9) ;
**caractérisé en ce que**
ladite première surface intérieure (21), la surface extérieure (241a) de ladite première portion d'extrémité (24a) et la surface extérieure (241b) de ladite deuxième portion d'extrémité (24b) sont revêtues d'une couche de revêtement respective, en particulier adaptée au contact alimentaire.

2. Dispositif de chauffage (1) selon la revendication 1, dans lequel chaque couche de revêtement est faite d'un matériau polymère ou sol-gel.

3. Dispositif de chauffage (1) selon la revendication 1 ou 2, dans lequel chaque couche de revêtement est faite ou essentiellement faite de l'un des matériaux suivants : un polyamide (PA), polytétrafluoroéthylène (PTFE), perfluoroalcoxy (PFA), éthylène-propylène fluoré (FEP), un polyuréthane (PU), un polyester, un matériau époxy, une silicone ou un sol-gel.

4. Dispositif de chauffage (1) selon la revendication 1 ou 2, dans lequel chaque couche de revêtement est faite ou essentiellement faite de l'un des matériaux suivants : silicium amorphe, oxyde de silicium amorphe, nitrure de silicium, dioxyde de silicium, polysilicium, fluorocarbone ou organofluoré.

5. Dispositif de chauffage (1) selon l'une quelconque des revendications précédentes, dans lequel chaque couche de revêtement est faite ou essentiellement faite de polyamide (PA).

6. Dispositif de chauffage (1) selon l'une quelconque des revendications précédentes, dans lequel chaque couche de revêtement a une épaisseur de 2 à 100 µm ; de préférence de 5 à 25 µm.

7. Dispositif de chauffage (1) selon l'une quelconque des revendications précédentes, dans lequel le conduit (4) a une longueur supérieure à la longueur dudit au moins un élément chauffant électrique (3) ; en particulier de sorte que la première portion d'extrémité (24a) et la deuxième portion d'extrémité (24b) sont adaptées pour être insérées dans le tube respectif (9).

8. Dispositif de chauffage (1) selon l'une quelconque des revendications précédentes, dans lequel chaque portion d'extrémité (24a, 24b) fait saillie, en particulier vers l'extérieur, par rapport à l'extrémité (30a, 30b) de l'au moins un élément chauffant électrique (3) étant à proximité de celui-ci.

9. Dispositif de chauffage (1) selon l'une quelconque des revendications précédentes, dans lequel ledit au moins un élément chauffant électrique (3) comprend au moins une résistance électrique (31) incorporée dans un matériau électriquement isolant (32) ; dans lequel ledit matériau électriquement isolant (32) est en contact, en particulier directement en contact, avec une deuxième surface intérieure (22) du corps métallique (2).

10. Dispositif de chauffage (1) selon l'une quelconque des revendications précédentes, dans lequel ledit au moins un élément chauffant électrique (3) et ledit conduit (4) s'étendent parallèlement l'un à l'autre.

11. Dispositif de chauffage (1) selon l'une quelconque des revendications précédentes, dans lequel ledit conduit (4) a un diamètre intérieur de 2 à 10 mm ; de préférence de 4 à 7 mm.

12. Machine pour préparer des boissons comprenant un dispositif (1) selon l'une quelconque des revendications précédentes.

13. Machine selon la revendication 12, comprenant un premier tube (9), notamment flexible, et un deuxième tube, notamment flexible ;
dans laquelle ladite première partie d'extrémité (24a) est insérée dans ledit premier tube (9) et ladite deuxième partie d'extrémité (24b) est insérée dans ledit deuxième tube.
